# EUROPEAN PATENT APPLICATION

(11) **EP 2 667 324 A2**
(43) Date of publication of application: **27.11.2013**
(21) Application number: 13160899.4
(22) Date of filing: 25.03.2013
(51) Int. Cl.: G06K 7/00

(54) **Management device and management method**

(30) Priority: 21.05.2012 JP 2012115963
(71) Applicant: FUJITSU LIMITED, Kawasaki-shi, Kanagawa 211-8588 (JP)
(72) Inventor: Hino, Haruhiko, Kawasaki-shi, Kanagawa 211-8588 (JP); Tomioka, Takeshi, Yokohama-shi, Kanagawa 222-0033 (JP); Osaki, Noritsugu, Kawasaki-shi, Kanagawa 211-8588 (JP)
(74) Representative: Schultes, Stephan

(57) **Abstract**

A management device includes: an acquisition unit configured to acquire a result obtained by communicating with a first wireless tag attached to each openable storage container in which location information is defined, a communicable range of the first wireless tag changing between a state where the storage container is unopened and a state where the storage container is opened; and a management unit configured to manage information indicating an opened state of the storage container and the location information with associating the opened state of the storage container and the location information with each other, on the basis of the result of the communication with the first wireless tag.

## Description

### FIELD

A technology disclosed in the present embodiment discussed herein is related to a management device, and a management method.

### BACKGROUND

The work of maintenance of transportation such as an airplane or a ship is an operation affecting human life and significantly important. As for a life-saving device (emergency equipment) such as a life jacket, used for protecting human life at the time of disaster, for example, in an airplane, it is obliged to carry a life-saving device such as a life jacket (Article 62 of the Civil Aeronautics Act). In addition, it is obliged to confirm, before departure, that an arrangement desirable for an operation, such as a life jacket, has been completed (Article 72-2 of the Civil Aeronautics Act). Therefore, in the past, a confirmation operation has been implemented where, before an operation, a cabin attendant visually confirms whether or not a life-saving device exits in each seat.

However, since many life-saving devices are installed under airplane seats, it has been desirable that a worker has performed checkout in a posture of crawling under a seat. So as to reduce such a workload of a worker and suppress a decrease in a work efficiency, recently a life-saving device management system has been proposed that is used for easily confirming the disposition state of a life-saving device (for example, refer to PATENT LITERATURE 1).

[PATENT LITERATURE 1] Japanese Laid-open Patent Publication No. 2012-035730

However, in PATENT LITERATURE 1, while the usage of an RFID tag has enabled a seat to be determined in which no life-saving device has been disposed, it has been difficult to easily confirm whether the storage container or storage bag of a life-saving device is opened or unopened. In addition, if it becomes easy to confirm whether not only the storage container of a life-saving device but also various storage containers in which location information is defined are opened or unopened, it may be considered that the facilitation of the work of maintenance or an operation in an airplane or a ship is ensured.

It is desirable to easily manage information relating to whether a storage container is opened or unopened.

### SUMMARY

According to an aspect of the invention, a management device includes: an acquisition unit configured to acquire a result obtained by communicating with a first wireless tag attached to each openable storage container in which location information is defined, a communicable range of the first wireless tag changing between a state where the storage container is unopened and a state where the storage container is opened; and a management unit configured to manage information indicating an opened state of the storage container and the location information with associating the opened state of the storage container and the location information with each other, on the basis of the result of the communication with the first wireless tag.

The technology disclosed in the present embodiment may easily manage information relating to whether a storage container is opened or unopened.

### BRIEF DESCRIPTION OF DRAWINGS

FIG. 1 is a diagram illustrating a used state of a reader/writer according to an embodiment.

FIG. 2 is a diagram illustrating a storage bag in perspective view.

FIG. 3A is a diagram illustrating an external view of an opening confirmation wireless tag, and FIG. 3B is a diagram illustrating a state where an inlay included in the opening confirmation wireless tag has been ejected.

FIG. 4A is a diagram schematically illustrating a cross-section structure of an opening confirmation wireless tag, and FIG. 4B is a diagram schematically illustrating a cross-section structure of the opening confirmation wireless tag attached on a release backing paper.

FIG. 5 is a diagram magnifying and illustrating a first portion (after separation) of an opening confirmation wireless tag.

FIG. 6 is a diagram for explaining a method of mounting an opening confirmation wireless tag.

FIG. 7 is a diagram illustrating a state of an opening confirmation wireless tag after a storage bag has been opened.

FIG. 8 is a hardware configuration diagram of a reader/writer.

FIG. 9 illustrates functional block diagrams of a reader/writer and a wireless tag.

FIG. 10A is a diagram illustrating a seat DB, and FIG. 10B is a diagram illustrating a life jacket DB.

FIG. 11 is a diagram illustrating examples of a seating arrangement of an airplane and a movement of a worker at the time of a check operation.

FIG. 12 is a flowchart illustrating processing in an acquisition unit and a determination unit.

FIG. 13 is a flowchart illustrating processing in a display control unit.

FIG. 14A and FIG. 14B are diagrams illustrating display examples of a display unit (No. 1).

FIG. 15 is a diagram illustrating a display example of a display unit (No. 2).

FIG. 16A and FIG. 16B are diagrams for explaining examples of a modification.

### DESCRIPTION OF EMBODIMENTS

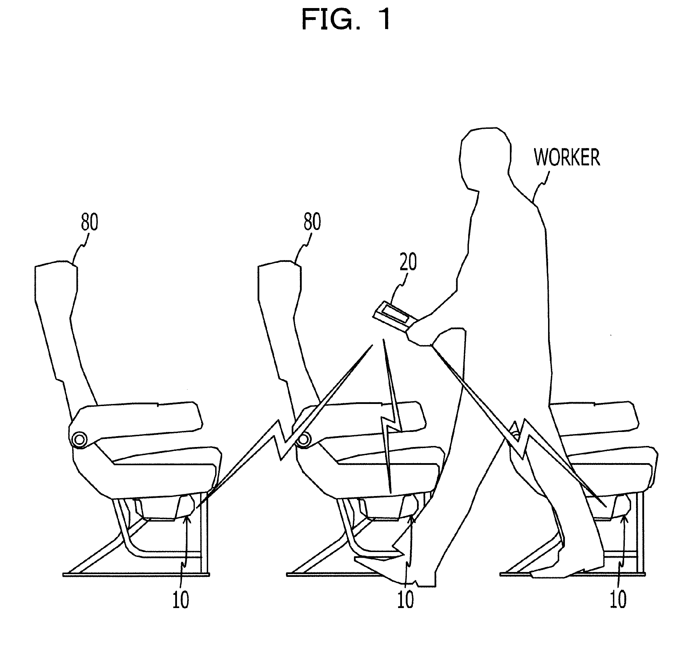

Hereinafter, an embodiment will be described in detail on the basis of FIG. 1 to FIG. 15. FIG. 1 is a diagram illustrating a state where a reader/writer 20 serving as a management device according to an embodiment is used. This reader/writer 20 is a terminal used by a worker performing a checkout operation within transportation such as an airplane or a ship (assumed to be the airplane in the present embodiment). The reader/writer 20 is a terminal mainly used for managing information relating to whether a storage bag 10 (in which a life jacket is stored) serving as a storage container installed under a seat 80 exists or does not exist and is opened or unopened. The locations of seats are defined within the transportation. Accordingly, the location of a storage bag provided in each seat is also identified.

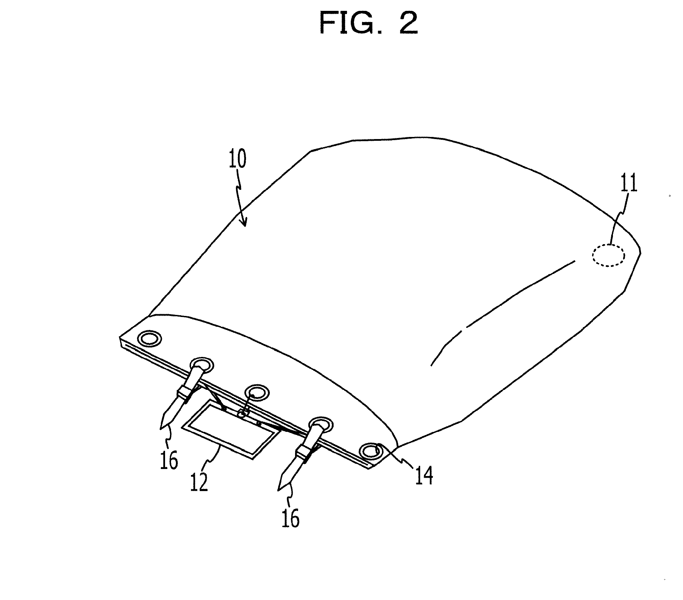

In FIG. 2, the storage bag 10 is illustrated in perspective view. The storage bag 10 is a bag for storing therewithin a life jacket, and as illustrated in FIG. 2, a plurality of string holes 14 are provided in the mouth portion thereof. After a life jacket has been stored in the storage bag 10, a fastening 16 is attached to a portion of the string holes 14, and hence, the storage bag 10 is put into an unopened state.

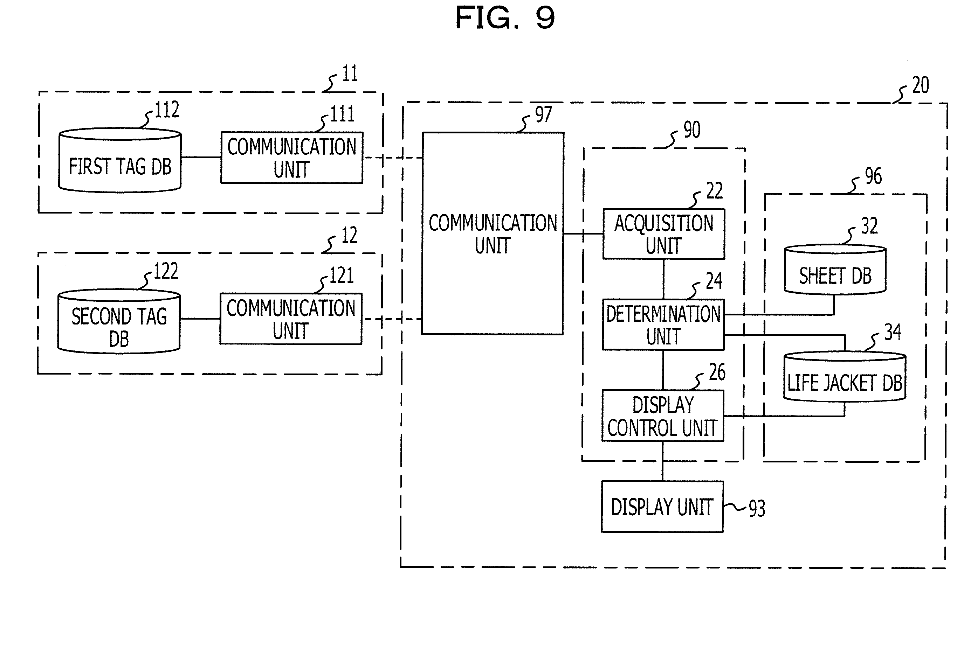

In a portion of the storage bag 10, an existence confirmation wireless tag 11 serving as a second wireless tag is provided. The existence confirmation wireless tag 11 includes, for example, a passive type Radio Frequency Identification (RFID) tag, and rectifies a radio wave of a Ultra-High Frequency (UHF) band (for example, 920 MHz) sent out from the reader/writer 20 to obtain drive power, and performs communication with the reader/writer 20 using the corresponding drive power. Accordingly, the existence confirmation wireless tag 11 transmits the information (a tag ID and the like) of the existence confirmation wireless tag 11 to the reader/writer 20. In addition, an IC chip (RFID chip) included in the existence confirmation wireless tag 11 includes a logic circuit, a memory circuit, and an analog RF circuit, and owing to these, a communication unit 111 and a first tag DB 112, illustrated in FIG. 9, are realized.

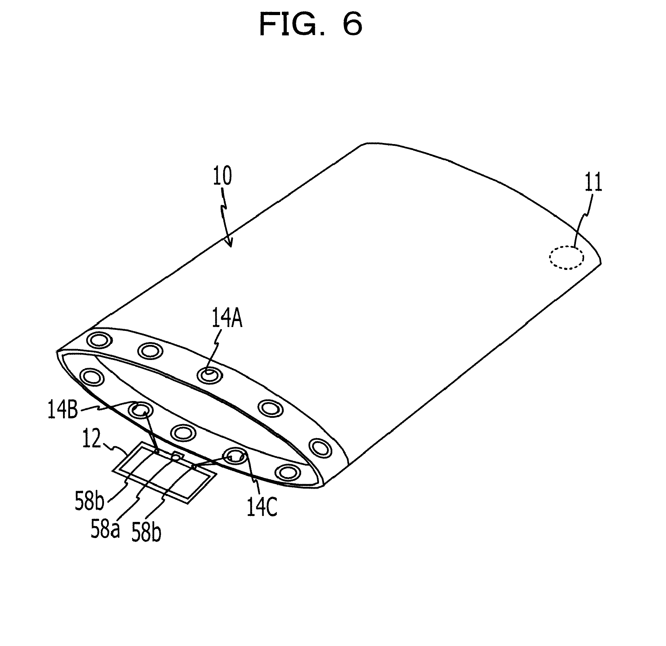

In addition, in the mouth portion of the storage bag 10, using the three string holes 14 (string holes 14A to 14C in FIG. 6), an opening confirmation wireless tag 12 serving as a first wireless tag is provided. The opening confirmation wireless tag 12 includes a passive type RFID tag, and rectifies a radio wave of a UHF band (for example, 920 MHz) sent out from the reader/writer 20 to obtain drive power, in the same way as the existence confirmation wireless tag 11, and performs communication with the reader/writer 20 using the corresponding drive power. Accordingly, the opening confirmation wireless tag 12 transmits the information (a tag ID and the like) of the opening confirmation wireless tag 12 to the reader/writer 20.

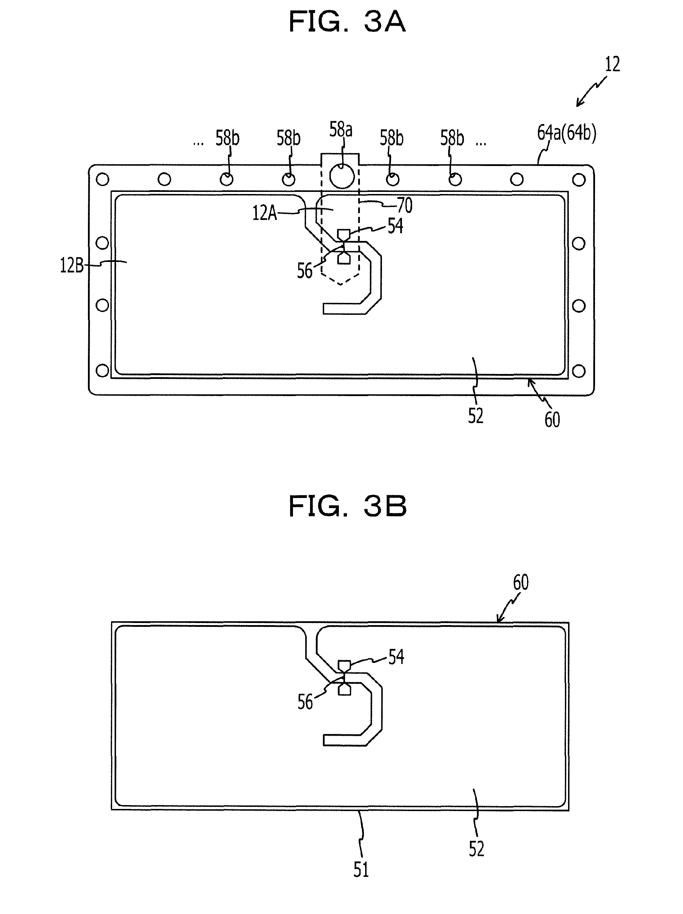

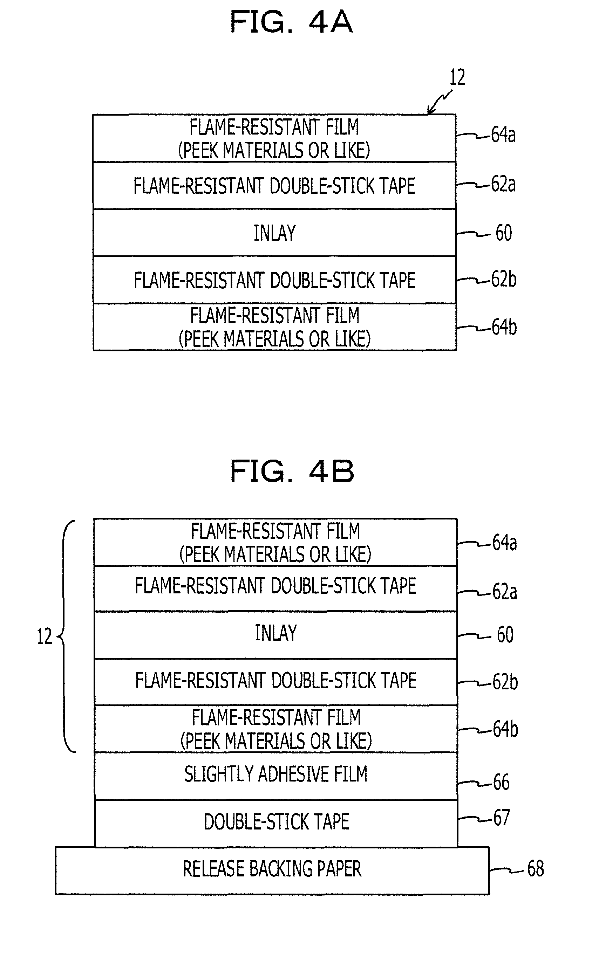

In FIG. 3A, the external view of the opening confirmation wireless tag 12 is illustrated, and in FIG. 3B, a state where an inlay 60 included in the opening confirmation wireless tag 12 has been ejected is illustrated. In addition, in FIG. 4A, the cross-section structure of the opening confirmation wireless tag 12 is schematically illustrated.

As illustrated in these drawings, the opening confirmation wireless tag 12 includes the inlay 60 (refer to FIG. 3B) and flame-resistant films (PEEK materials or the like) 64a and 64b sandwiching therebetween the corresponding inlay 60 on both side thereof through flame-resistant double-stick tapes 62a and 62b (refer to FIG. 4A).

As illustrated in FIG. 3B, the inlay 60 includes a film 51 whose material is PET (Polyethylene terephthalate) or the like, a tag antenna 52, a feeding line (strap) 54, and an IC chip (RFID chip) 56.

The foil of a metal such as aluminum is subjected to etching or a conductive coating material whose main component is a metal particle is printed, and hence, the tag antenna 52 is provided in the surface of the film 51. The tag antenna 52 has an approximately rectangle shape, and in the center thereof, an approximately S-shaped slit is formed. The antenna gain of the tag antenna 52 is designed so as to fall within the range of about 0.1 to 2 dBi, and the tag antenna has a shape enabling the transmission/reception of a radio wave to be performed in the vicinity of the frequency of 920 MHz. When the opening confirmation wireless tag 12 is caused to be face to face with the front face of the antenna of the reader/writer 20 and a transmission output from the reader/writer 20 is assumed to be 2 W EIRP, a communication distance between the reader/writer 20 and the opening confirmation wireless tag 12 exceeds 2 m.

The strap 54, whose material is a conductive metal such as copper, is provided so as to form a bridge in the slit in the vicinity of the central portion of the tag antenna 52. The RFID chip 56 is provided in the vicinity of the central portion of the strap 54. Accordingly, the RFID chip 56 turns out to be electrically connected to the tag antenna 52 through the strap 54. In addition, the RFID chip 56 includes a logic circuit, a memory circuit, and an analog RF circuit, and owing to these, a communication unit 121 and a second tag DB 122 are realized.

The flame-resistant films 64a and 64b are films whose materials are Polyether ether ketone, and films having high heat resistance, mechanical strengths, chemical resistance, and flame resistance. In the flame-resistant films 64a and 64b in the vicinity of the inlay 60, as illustrated in FIG. 3A, a first through hole 58a and a plurality of second through holes 58b whose radii are smaller than the first through hole 58a are formed. These first and second through holes 58a and 58b are holes used when the opening confirmation wireless tag 12 is attached to the storage bag 10 using cable ties such as wires.

In addition, as illustrated in FIG. 4B, owing to the constraint of manufacturing, the opening confirmation wireless tag 12 is subjected to shipping or the like in a state of being attached on a release backing paper 68. Therefore, in the present embodiment, since the opening confirmation wireless tag 12 is attached to the storage bag 10 using cable ties such as wires, usability is not good if a double-stick tape or the like remains to adhere to a surface attached on the release backing paper 68. Therefore, in the present embodiment, by causing a double-stick tape 67 and a slightly adhesive film 66 to lie between the release backing paper 68 and the opening confirmation wireless tag 12, the slightly adhesive film 66 and the flame-resistant film 64b are caused to be peeled off from each other when the opening confirmation wireless tag 12 is peeled off from the release backing paper 68. Accordingly, since the double-stick tape 67 does not remain in the opening confirmation wireless tag 12, it may be possible to improve the usability of the opening confirmation wireless tag 12.

Here, in a boundary portion (the outer edge portion of a first portion) between the first portion including the RFID chip 56 and a second portion other than the first portion in the opening confirmation wireless tag 12, a perforation 70 is formed. Accordingly, it may be possible to cause the first portion and the second portion in the opening confirmation wireless tag 12 to be separated from each other without using a tool (shears, a knife, or the like).

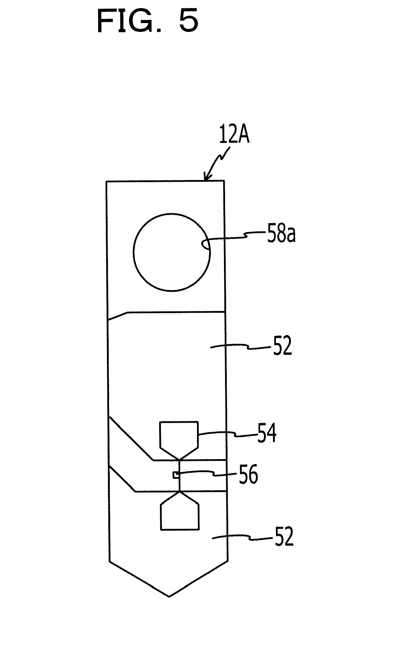

In this case, when the first portion is separated along the perforation 70, the tag antenna 52 remains in the first portion (assumed to be assigned with a symbol "12A") only by, for example, a length of about 1 cm on each side of the RFID chip 56, as illustrated in FIG. 5. In this case, if the transmission output of the reader/writer 20 is 2 W EIRP, communication between the opening confirmation wireless tag 12 and the reader/writer 20 becomes disabled. In addition, even if the transmission output of the reader/writer 20 is increased to be 4 W EIRP, a communication distance between the opening confirmation wireless tag 12 and the reader/writer 20 becomes less than 10 cm, and becomes insufficient for communication from a long distance.

As illustrated in FIG. 6, a worker gets cable ties such as wires through the two second through holes 58b in the opening confirmation wireless tag 12 configured in such a way as described above, and gets the corresponding cable ties through the string holes 14B and 14C in the storage bag 10 to tie the cable ties. Accordingly, the worker attaches the opening confirmation wireless tag 12 to the storage bag 10. In addition, as illustrated in FIG. 2, after having closed the mouth of the storage bag 10 using the fastenings 16 (after causing the mouth of the storage bag 10 to be unopened), the worker gets a cable tie such as a wire through the first through hole 58a in the opening confirmation wireless tag 12 and gets the corresponding cable tie through the string hole 14A in the storage bag 10 (refer to FIG. 6) to tie the cable tie (refer to FIG. 2).

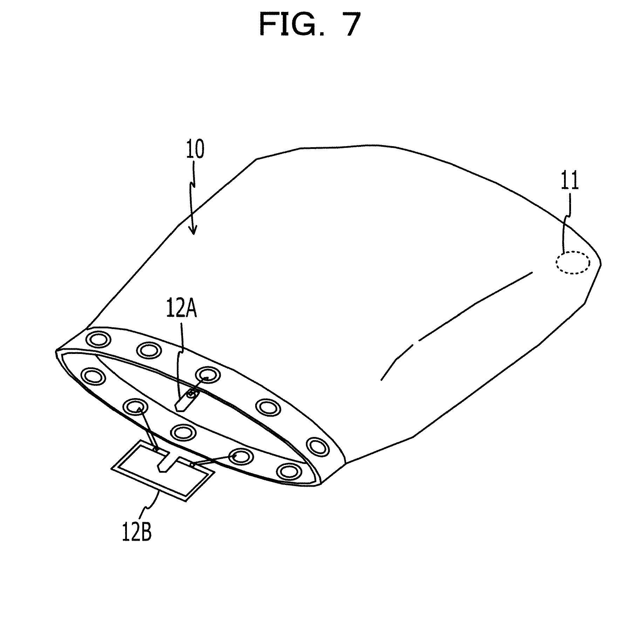

In this case, when a passenger or the like on an airplane opens the storage bag 10 as illustrated in FIG. 7, the first portion 12A and the second portion (assumed to be assigned with a symbol "12B") in the opening confirmation wireless tag 12 turn out to be separated from each other. In other words, the communicable range of the opening confirmation wireless tag 12 changes between a state where the storage bag 10 is unopened and a state where the storage bag 10 is opened.

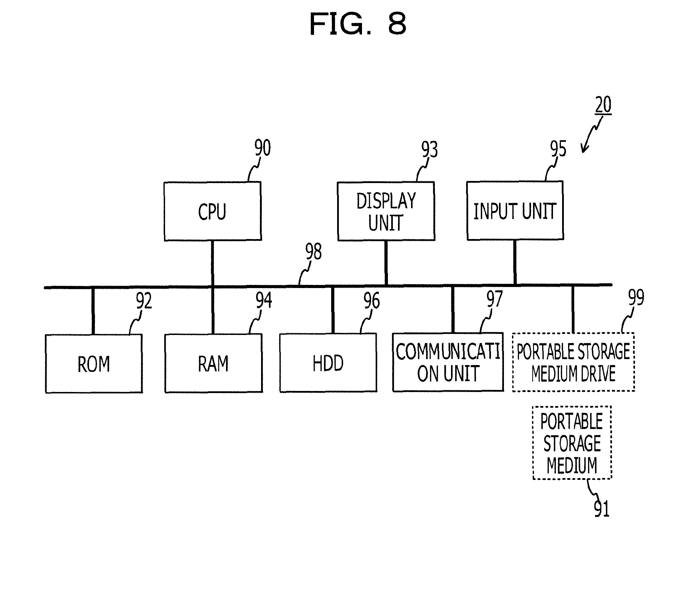

Next, the reader/writer 20 will be described in detail on the basis of FIG. 8 to FIG. 10.

In FIG. 8, the hardware configuration of the reader/writer 20 is schematically illustrated. As illustrated in this FIG. 8, the reader/writer 20 includes a CPU 90, a ROM 92, a RAM 94, a storage unit (here, Hard Disk Drive (HDD)) 96 and the like. Each unit in the configuration of the reader/writer 20 is connected to a bus 98. In the reader/writer 20, the CPU 90 executes a program (management program) stored in the ROM 92 or the HDD 96 or a program (management program) a portable storage medium drive 99 included in the reader/writer 20 or connectable to the reader/writer 20 has read from a portable storage medium 91, and hence, the function of each unit in FIG. 9 is realized.

The CPU 90 executes the program, and hence, as illustrated in FIG. 9, the reader/writer 20 realizes functions as an acquisition unit 22, a determination unit 24, and a display control unit 26. In addition, in the HDD 96 in the reader/writer 20, a seat DB 32 and a life jacket DB 34 are stored.

The acquisition unit 22 acquires and transmits the information of the existence confirmation wireless tag 11 (second wireless tag), acquired through a communication unit 97, and the information (tag ID) of the opening confirmation wireless tag 12 (first wireless tag) to the determination unit 24.

By referring to the seat DB 32, the determination unit 24 determines whether or not a life jacket in a seat corresponding to the tag IDs of the existence confirmation wireless tag 11 and the opening confirmation wireless tag 12, acquired in the acquisition unit 22, exists and determines whether opened or unopened when the life jacket exists. In addition, the determination unit 24 stores a determination result in the life jacket DB 34. In addition, a function serving as a management unit including the determination unit 24 and the life jacket DB 34 is realized that manages information (the determination result) based on a communication result between the existence confirmation wireless tag 11 and the opening confirmation wireless tag 12 with associating the information (the determination result) with the seat.

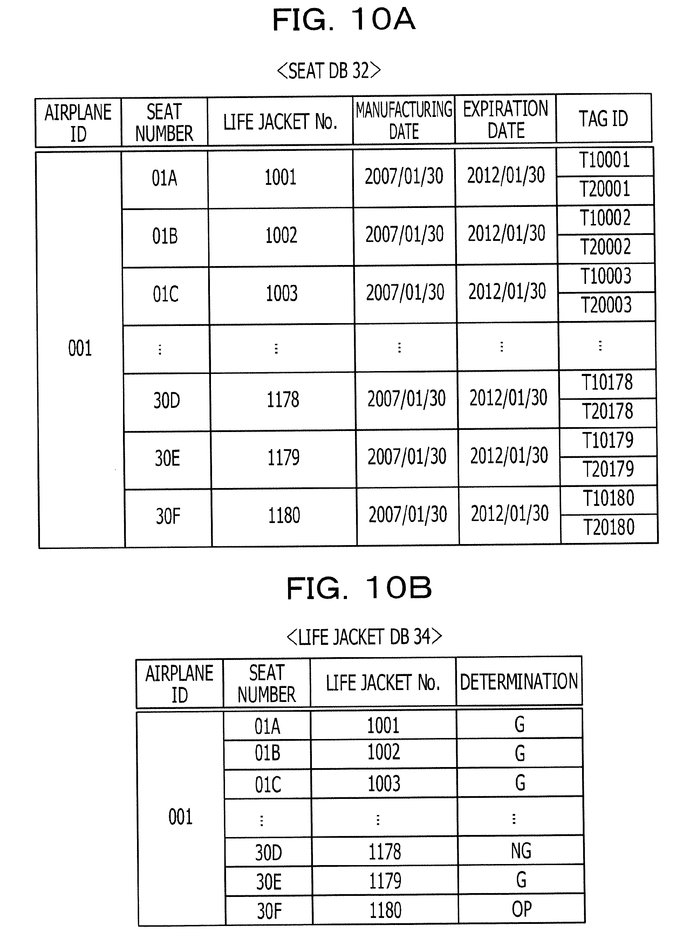

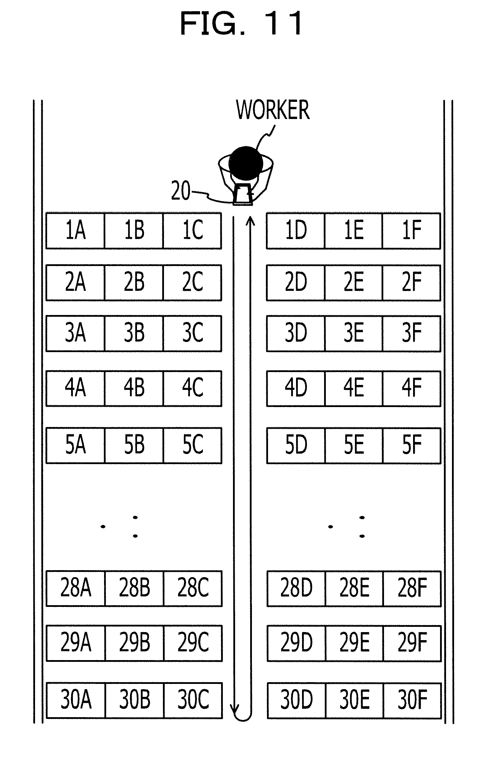

Here, as illustrated in FIG. 10A, the seat DB 32 includes individual fields of an "airplane ID", a "seat number", a "life jacket No.", a "manufacturing date", an "expiration date", and a "tag ID". In the field of the "airplane ID", the identifier of the body of an airplane is input. In the field of the "seat number", the identifiers (01A, 01B, ···) of seats are input. In addition, it is assumed that the seats of the airplane adopt such arrangement as illustrated in FIG. 11. In the field of the "life jacket No.", the identifier of a life jacket (and the storage bag 10) is input. In the field of the "manufacturing date", the manufacturing date of the life jacket is input, and in the field of the "expiration date", an expiration date corresponding to the manufacturing date is input. In addition, in the field of the "tag ID", the identifiers of the existence confirmation wireless tag 11 and the opening confirmation wireless tag 12 provided in the storage bag 10 of each life jacket are input.

In addition, as illustrated in FIG. 10B, the life jacket DB 34 includes individual fields of an "airplane ID", a "seat number", a "life jacket No.", and "determination". In the field of the "determination", one of "G" indicating that an unopened life jacket (storage bag 10) exists under a seat, "OP" indicating that an opened life jacket (storage bag 10) exists under a seat, and "NG" indicating that no life jacket (storage bag 10) exists under a seat is input as a determination result.

The display control unit 26 displays the determination result of the determination unit 24 on a display unit 93 in response to the update state of the life jacket DB 34.

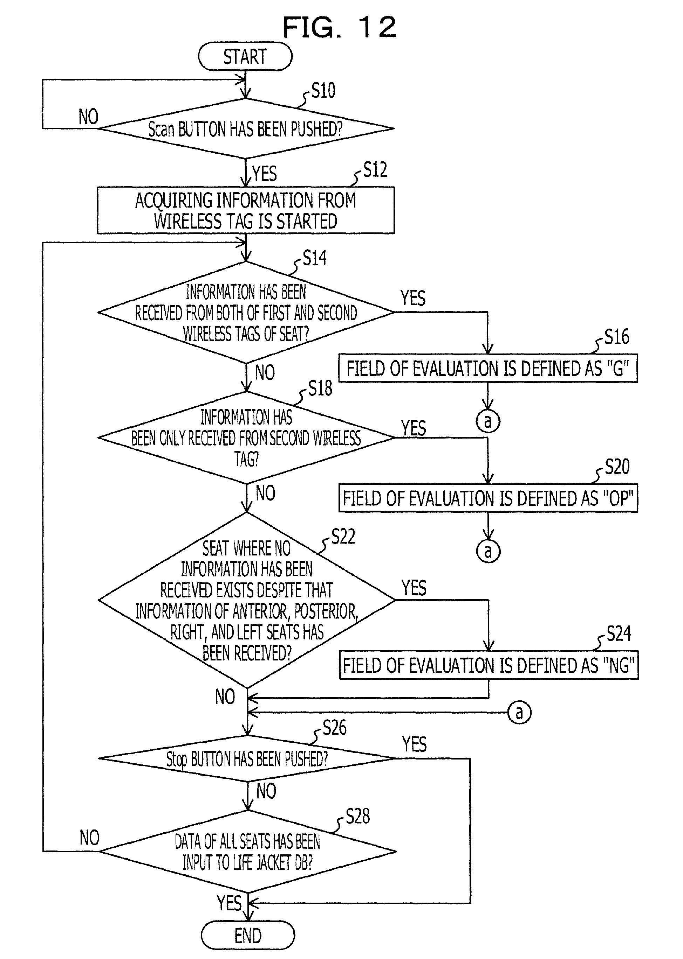

Next, along a flowchart in FIG. 12, processing in the acquisition unit 22 and the determination unit 24 will be described in detail.

The present processing is processing performed when a worker walks along an aisle (between a column C and a column D) within an airplane in a state of holding the reader/writer 20, as illustrated in FIG. 11.

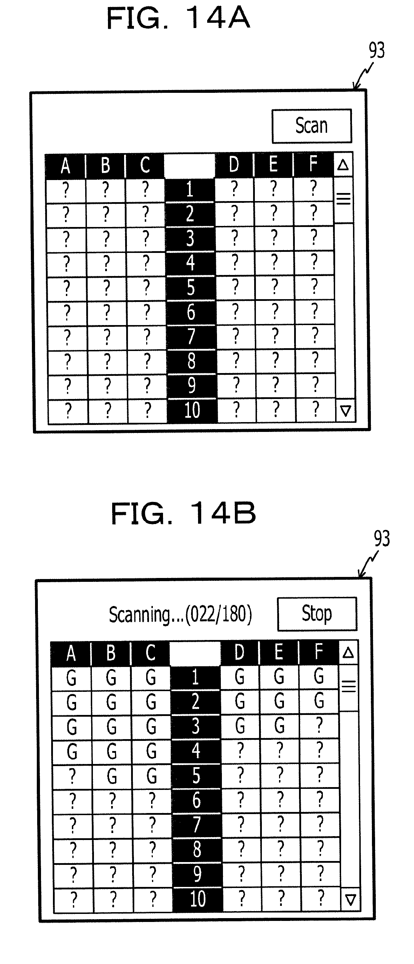

In the processing in FIG. 12, first in a step S10, the acquisition unit 22 waits until a Scan button is pushed. In addition, since the Scan button is displayed on the display unit 93 in the reader/writer 20 (refer to FIG. 14A), the acquisition unit 22 shifts to a step S12 in a stage where the worker has pushed the Scan button through an input unit 95. In addition, it is assumed that, for example, after having pushed the Scan button at a location in FIG. 11, the worker starts moving along the aisle within the airplane.

When having shifted to the step S12 in FIG. 12, the acquisition unit 22 starts acquiring information from the existence confirmation wireless tag 11 (second wireless tag) and the opening confirmation wireless tag 12 (first wireless tag). Next, in a step S14, the determination unit 24 determines whether or not information (tag IDs) has been received from both of the existence confirmation wireless tag 11 and the opening confirmation wireless tag 12 corresponding to a seat. In addition, in the step S14, the determination unit 24 performs determination based on the acquired tag IDs of the existence confirmation wireless tag 11 and the opening confirmation wireless tag 12 and the seat DB 32. When the determination here has been affirmed, the determination unit 24 shifts to a step S16. While individually inputting the airplane ID, the seat number, and the life jacket No. to the life jacket DB 34, the determination unit 24 inputs "G" (a determination result indicating that an unopened life jacket exists) to the field of the determination. In addition, when the processing operation in the step S16 has been terminated, the determination unit 24 shifts to a step S26.

On the other hand, when the determination in the step S14 has been denied, the determination unit 24 shifts to a step S18, and determines whether or not information has been only received from the existence confirmation wireless tag 11 (second wireless tag) corresponding to a seat. When the determination here has been affirmed, the determination unit 24 shifts to a step S20. While individually inputting the airplane ID, the seat number, and the life jacket No. to the life jacket DB 34, the determination unit 24 inputs "OP" (a determination result indicating that an opened life jacket (storage bag 10) exists) to the field of the determination. In addition, when the processing operation in the step S20 has been terminated, the determination unit 24 shifts to the step S26.

In addition, a case where the determination in the step S18 is affirmed means a case where the information of the opening confirmation wireless tag 12 (first wireless tag) may have not been received. When the information of the opening confirmation wireless tag 12 (first wireless tag) may have not been received, it may be estimated that the first portion and the second portion in the opening confirmation wireless tag 12 have been separated from each other and hence the storage bag 10 has been opened. As described above, the determination unit 24 shifts to the step S20, and inputs the "OP" (a determination result indicating that an opened life jacket exists) to the field of the determination while individually inputting the airplane ID, the seat number, and the life jacket No. to the life jacket DB 34.

On the other hand, when the determination in the step S18 has been denied, the determination unit 24 shifts to a step S22. In the step S22, it is determined whether or not a seat where no information from the existence confirmation wireless tag 11 has been received exists, despite that the information of anterior, posterior, right, and left seats has been received. When the determination here has been affirmed, the determination unit 24 shifts to a step S24, and inputs the "NG" (a determination result indicating that no life jacket exists) to the field of the determination while individually inputting the airplane ID, the seat number, and the life jacket No. to the life jacket DB 34. In addition, when the processing operation in the step S24 has been terminated or when the determination in the step S22 has been denied, the determination unit 24 shifts to the step S26.

When having shifted to the step S26, the determination unit 24 determines whether or not a Stop button has been pushed by the worker. In addition, the Stop button is displayed on the display unit 93 in the reader/writer 20 (refer to FIG. 14B). Therefore, when the worker has pushed the Stop button through the input unit 95, the determination in the step S26 is affirmed, and the determination unit 24 terminates the whole processing in FIG. 12. On the other hand, when the determination in the step S26 has been denied, the determination unit 24 shifts to a step S28.

When having shifted to the step S28, the determination unit 24 determines whether or not the data (determination) of all the seats corresponding to the airplane ID has been input to the life jacket DB 34. When the determination here has been affirmed, the determination unit 24 terminates the whole processing in FIG. 12. However, when the determination has been denied, the determination unit 24 returns to the step S14. After that, the steps S14 to S28 are repeated, and in a stage when the determination in the step S26 or the step S28 has been affirmed, the whole processing in FIG. 12 is terminated.

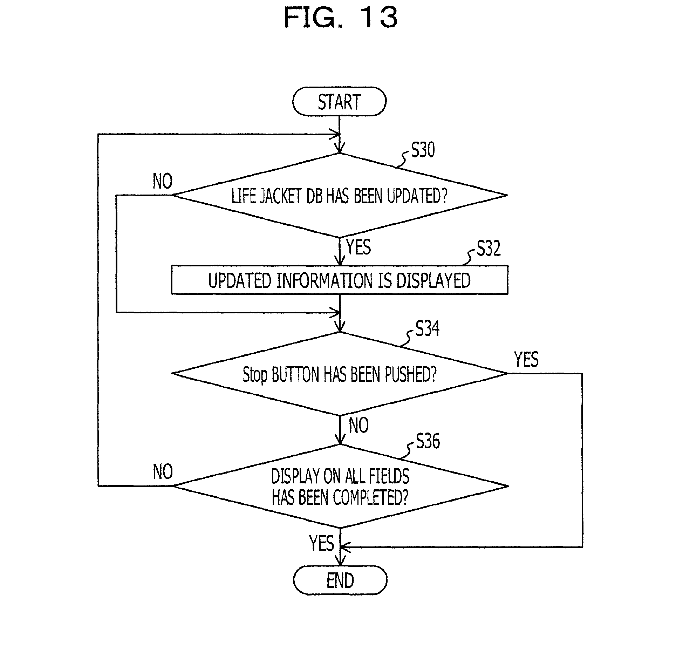

Next, processing in the display control unit 26 will be described in detail on the basis of FIG. 13. In addition, the processing in FIG. 13 is processing simultaneously performed in parallel with the processing in FIG. 12.

In the processing in FIG. 13, in a step S30, the display control unit 26 determines whether or not the life jacket DB 34 has been updated. In this case, when the processing operation of one of the steps S16, S20, and S24 in FIG. 12 has been performed in the determination unit 24, the determination in the step S30 turns out to be affirmed. In addition, when the determination in the step S30 has been affirmed, the display control unit 26 shifts to a step S32 and displays the updated information on the display unit 93. In addition, the display control unit 26 may display the updated information in the vicinity of the center of the display unit 93 (centering). After that, the display control unit 26 shifts to a step S34. On the other hand, when the determination in the step S30 has been denied, the display control unit 26 directly shifts to the step S34.

In addition, in FIG. 14B, a display state is illustrated when the tag IDs of the existence confirmation wireless tags 11 and the opening confirmation wireless tags 12 of 22 life jackets (storage bags 10) have been read (when all the life jackets have corresponded to "G").

When having shifted to the step S34 in FIG. 13, the display control unit 26 determines whether or not the Stop button has been pushed by the worker (refer to FIG. 14B). When the determination here has been affirmed, the display control unit 26 terminates the whole processing in FIG. 13. On the other hand, when the determination in the step S34 has been denied, the display control unit 26 shifts to a step S36.

When having shifted to the step S36, the display control unit 26 determines whether or not display on fields corresponding to all the seats has been completed. When the determination here has been affirmed, the display control unit 26 terminates the whole processing in FIG. 13, but when the determination has been denied, the display control unit 26 returns to the step S30. After that, the processing operations and the determination operations in the steps S30 to S36 are repeated, and in a stage where the determination in the step S34 or the step S36 has been affirmed, the whole processing in FIG. 13 is terminated.

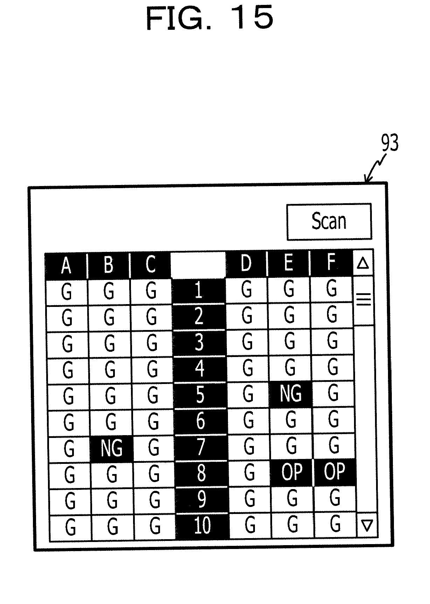

In addition, FIG. 15 illustrates an example of the display state of the display unit 93 after the whole processing in FIG. 13 has been terminated. In FIG. 15, life jackets in the seats of "5E" and "7B" do not exist, and life jackets in the seats of "8E" and "8F" have been opened. Accordingly, by arranging the replenishment of life jackets or confirming opened life jackets while watching the corresponding screen, it may be possible for the worker to complete a checkout operation for life jackets. In addition, after a predetermined worker has refolded the opened life jackets and the storage bags 10 have been put into unopened states, the life jackets are returned under the seats 80.

As described in detail above, according to the present embodiment, the reader/writer 20 includes the acquisition unit 22 acquiring a result obtained by communicating with the opening confirmation wireless tag 12, which is attached to each openable storage bag 10 provided so as to correspond to a seat (location information is defined) and whose communicable range changes between a state where the storage bag 10 is unopened and a state where the storage bag 10 is opened, and the determination unit 24 storing, in the life jacket DB 34, information (a determination result relating to being opened or unopened) based on the result of the communication with the opening confirmation wireless tag 12 with associating the information (the determination result relating to being opened or unopened) with the seat (the location information). Accordingly, by collecting the determination results of the storage bags 10 corresponding to the individual seats using the reader/writer 20, it may be possible for the worker to easily collect (manage) information of whether the storage bags 10 are opened or unopened. Accordingly, when checking the storage bag 10 (life jacket) stored under a seat, the worker may not take a posture of crawling under the seat or the like, and it may be possible to reduce a workload and improve the efficiency of a check operation.

In addition, in the present embodiment, the acquisition unit 22 acquires a result obtained by communicating with the existence confirmation wireless tag 11 which is attached to each openable storage bag 10, and the determination unit 24 stores information (the determination result relating to existence or absence) based on the result of the communication with the existence confirmation wireless tag 11 with associating the information (the determination result relating to existence or absence) with the seat. In this way, in the present embodiment, the opening confirmation wireless tag 12 and the existence confirmation wireless tag 11 are used, and hence, it may be possible to determine three cases including a case where the storage bag 10 exists in an unopened state, a case where the storage bag 10 exists in an opened state, and a case where the storage bag 10 does not exist.

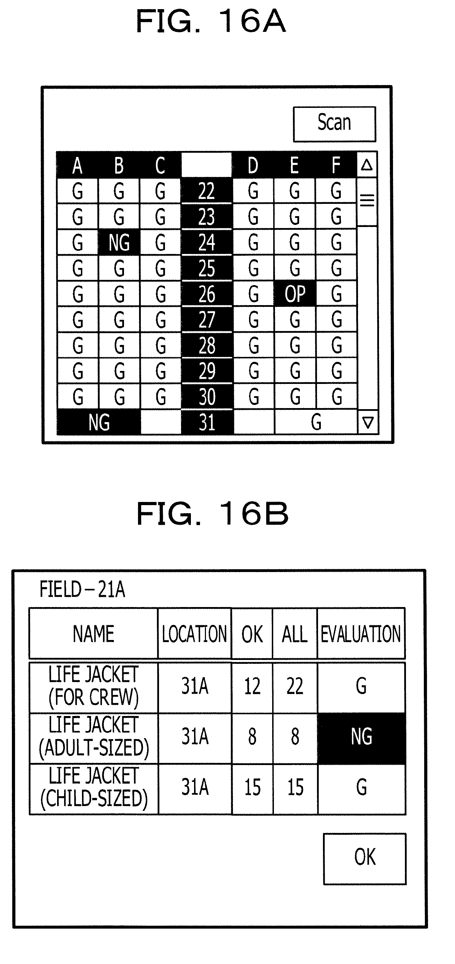

In addition, while, in the above-mentioned embodiment, a case has been described where the checkout operation for a life jacket provided so as to correspond to a seat is performed, the embodiment is not limited to this. For example, using the reader/writer 20, it may also be possible to perform a checkout operation for a plurality of life jackets stored in a shelf installed at the back of an airplane. In this case, as illustrated in FIG. 16A, in a case where there are shelves in locations "31A" and "31F", when at least one life jacket whose determination is "NG" or "OP" exists within life jackets stored in each shelf, "NG" is displayed. In addition, when the worker has selected the shelf in the location "31A", whose determination is "NG" in a display screen in FIG. 16A, the breakdown of the determination may also be displayed as illustrated in FIG. 16B. In doing this way, it may become possible to simply perform a checkout operation for life jackets within a shelf.

In addition, while, in the above-mentioned embodiment, a case has been described where the worker collects the information of the existence confirmation wireless tag 11 and the opening confirmation wireless tag 12 while moving between seats with holding the reader/writer 20, the embodiment is not limited to this. For example, the reader/writers 20 may also be installed in a plurality of places within an airplane, and the information of the existence confirmation wireless tags 11 and the opening confirmation wireless tags 12 may also be continuously or arbitrarily collected.

In addition, while, in the above-mentioned embodiment, a case has been described where the opening confirmation wireless tag 12 is provided for the life jacket (storage bag 10), the embodiment is not limited to this. If another storage container (for example, a bottle, a box, or the like) is an openable storage container capable of being provided so as to correspond to a seat (location information is defined), the opening confirmation wireless tag 12 may also be provided in the other storage container.

In addition, while, in the above-mentioned embodiment, a case has been described where the wireless tag 12 or the reader/writer 20 is used in the airplane, the embodiment is not limited to this, and the wireless tag 12 or the reader/writer 20 may also be used in a ship or the like.

In addition, the above-mentioned processing function may be realized owing to a computer. In this case, a program is provided where the content of processing of a function to be included in a processor is described. The program is executed in the computer, and hence, the above-mentioned processing function is realized on the computer. The program where the content of processing is described may be recorded in a computer-readable recording medium.

When being distributed, the program is sold in the form of a portable recording medium such as, for example, a Digital Versatile Disc (DVD) or a Compact Disc Read Only Memory (CD-ROM), in which the program is recorded. In addition, the program may be stored in a storage device in a server computer, and the program may also be transferred from the server computer to another computer through a network.

For example, the computer executing the program stores, in the self-storage device, the program recorded in the portable recording medium or the program transferred from the server computer. In addition, the computer reads the program from the self-storage device and executes processing in accordance with the program. In addition, the computer may also directly read the program from the portable recording medium and execute processing in accordance with the program. In addition, every time the program is transferred from the server computer, the computer may also sequentially execute processing in accordance with the received program.

The above-mentioned embodiment is an example of preferred embodiments of the present invention. In this regard, however, the embodiment is not limited to this, and various modifications may be implemented without departing from the scope of the present invention.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

### REFERENCE SIGNS LIST

10 storage bag (storage container)
11 existence confirmation wireless tag (second wireless tag)
12 opening confirmation wireless tag (first wireless tag)
20 reader/writer (management device)
22 acquisition unit
24 determination unit (part of management unit)
34 life jacket DB (part of management unit)

## Claims

1. A management device comprising:
an acquisition unit configured to acquire a result obtained by communicating with a first wireless tag attached to each openable storage container in which location information is defined, a communicable range of the first wireless tag changing between a state where the storage container is unopened and a state where the storage container is opened; and
a management unit configured to manage information indicating an opened state of the storage container and the location information with associating the opened state of the storage container and the location information with each other, on the basis of the result of the communication with the first wireless tag.

2. The management device according to claim 1, wherein the acquisition unit further acquires a result of communication with a second wireless tag attached to each of the storage containers, and
wherein the management unit manages information based on the result of communication with the second wireless tag with associating the information and the storage container with each other.

3. The management device according to claim 2, wherein the management unit manages information relating to existence of an openable storage container in which the location information is defined and information relating to an opened or unopened state of the storage container.

4. A management method to be executed by a computer, the management method comprising:
acquiring a result obtained by communicating with a first wireless tag attached to each openable storage container in which location information is defined, a communicable range of the first wireless tag changing between a state where the storage container is unopened and a state where the storage container is opened; and
managing information indicating an opened state of the storage container and the location information with associating the opened state of the storage container and the location information with each other, on the basis of the result of the communication with the first wireless tag.

5. The management method according to claim 4, wherein the acquiring further acquires a result of communication with a second wireless tag attached to each of the storage containers, and
wherein the managing manages information based on the result of communication with the second wireless tag with associating the information and the storage container with each other.

6. The management method according to claim 5, wherein the managing manages information relating to existence of an openable storage container in which the location information is defined and information relating to an opened or unopened state of the storage container.
